# EUROPEAN PATENT SPECIFICATION

(11) **EP 1 050 258 B1**
(45) Date of publication and mention of the grant of the patent: **20.08.2003**
(21) Application number: 00108922.6
(22) Date of filing: 27.04.2000
(51) Int. Cl.: A47J 31/06, A47J 31/40

(54) **Device for feeding precompressed single-serving pods in machines for the production of espresso coffee beverages**
Verfahren zur Zufuhr vorgepresster Einwegkaffeepulverkuchen in Espressomaschinen
Dispositif pour alimenter des cartouches préalablement comprimées dans des machines café expresso

(30) Priority: 04.05.1999 IT BO990215
(43) Date of publication of application: 08.11.2000
(73) Proprietor: Euromatik S.r.l., 40033 Casalecchio di Reno (Bo) (IT)
(72) Inventor: Santi, Giuseppe, 40033 Casalecchio di Reno (IT)
(74) Representative: Gustorf, Gerhard, Dipl.-Ing.

(56) References cited:
- EP-A- 0 832 592
- DE-A- 19 647 039
- PATENT ABSTRACTS OF JAPAN vol. 015, no. 324 (C-0859), 19 August 1991 (1991-08-19) & JP 03 123516 A (LUCKY CAFE MACH KK;OTHERS: 01), 27 May 1991 (1991-05-27)

## Description

Device for feeding precompressed single-serving pods in machines for the production of espresso coffee beverages, comprising a retractable drawer (6) incorporating a lower pod support (4) and pod (5) retaining means (17) which are dissociated for travel purposes from said drawer (6) and activated and deactivated in phase with the retraction thereof.

### DETAILED DESCRIPTION

### Prior art

In machines for the production of espresso coffee beverages, it is known to use "pods" for the feeding thereof, said pods comprising precompressed single servings of ground coffee enclosed in filter paper and subsequently packed in strips for the feeding of the automatic devices, or separately, and also in strips having predetermined breaking points, for manual use, the device according to the present invention falling within said field of manual use of said pods. Document DE-19647039 discloses one of such machines.

### Objects of the invention

The principal object of the present invention is, within the technological field identified above, that of providing a manual feed device for single-serving pods, especially in the simplest and most economical machines for the production of espresso coffee beverages, such as automatically to provide for the removal of the spent pod at the end of the operating cycle, so that the manual nature of the feed is substantially confined to the positioning of the new pod.

Another object of the present invention is that of achieving the above object by means of a device which is constructed and engineered in a particularly simple and, therefore, robust manner and which can be actuated manually or automatically, in the latter case by using the broadest possible range of known means.

Yet another object of the present invention is that of achieving the above objects by means of a device which can be combined as easily as possible with the components forming the machines for the production of espresso coffee beverages according to the prior art.

A further object of the present invention is that of achieving the above objects by means of a simple, functional and efficient device, reliable in operation and relatively economical in cost, having regard to the results achieved therewith in practice.

### Summary of the invention

These and other, additional objects are all achieved with the device for feeding precompressed single-serving pods in machines for the production of espresso coffee beverages according to the present invention, comprising a retractable drawer (6) incorporating a lower pod support (4) and pod (5) retaining means (17) which are dissociated for travel purposes from said drawer (6) and activated and deactivated in phase with the retraction thereof.

### Brief description of the drawings

Further features and advantages of the device according to the present invention will be more clearly apparent from the detailed description which follows of a preferred but not exclusive embodiment thereof, shown by way of example only and without limiting effect in the five attached plates of drawings, in which:

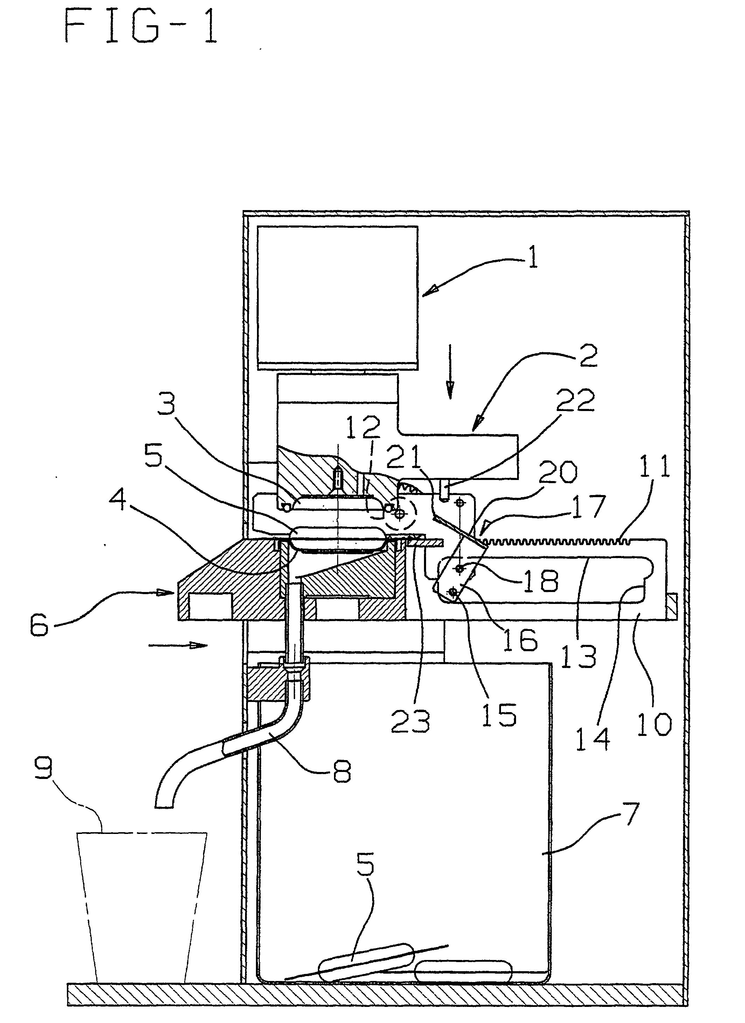

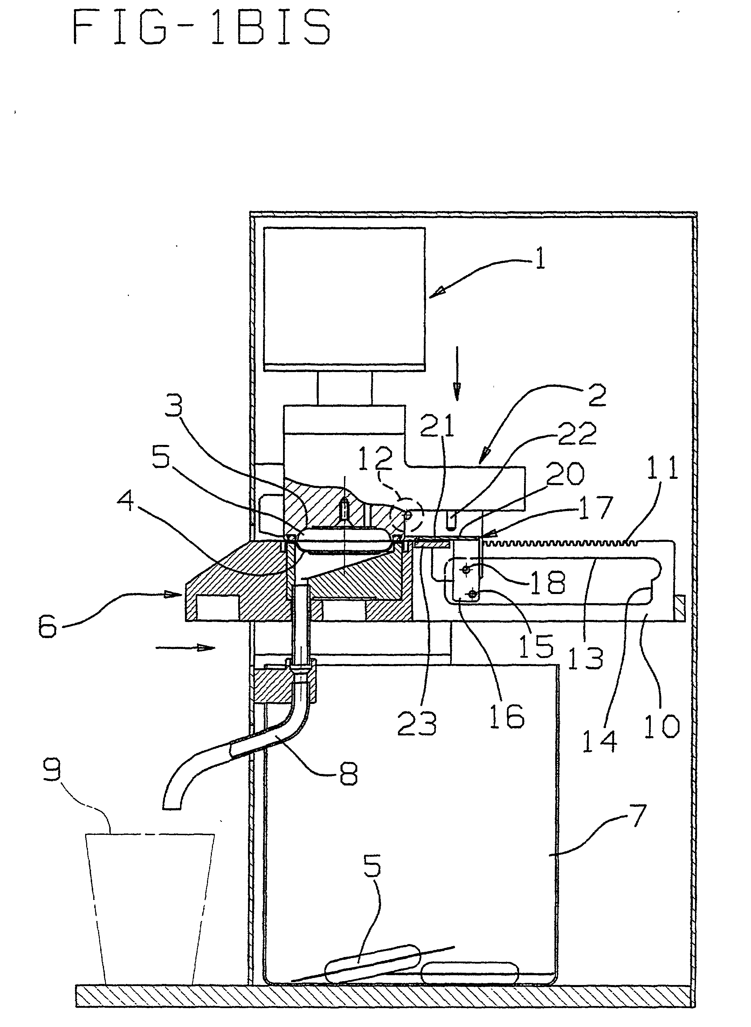

Figure 1 shows a view in lateral section of a machine for the production of espresso coffee beverages having associated therewith the device according to the present invention in one of its operating positions;
Figure 1 his shows an associated detail;
Figure 2 shows the same view as Figure 1, illustrating the device according to the present invention in another of its operating positions;
Figure 3 shows a plan view of the device according to the present invention; and
Figure 4 shows a detailed frontal section of said device.

### Static description of the illustrative embodiment

With reference to said figures, and in particular to Figure 1, 1 designates as a whole the upper turret of a machine for the production of espresso coffee beverages, comprising all the mechanisms, devices and pipes of a known type necessary for a vertically sliding assembly, in turn indicated as a whole by 2, functionally to move, during the pressurization stroke, an upper pod support shell 3 onto a lower pod support shell 4, between which is shown a pod 5 consisting of a precompressed, discoid single serving of ground coffee enclosed between two usually quadrilateral, but possibly differently shaped, sheets of filter paper joined to each other in a known manner.

The lower pod support shell 4 is recessed into a pull-out drawer, indicated as a whole by 6, positioned above a collecting box 7 for spent pods 5 and connected to piping 8 for passing the prepared beverage to a consumption receptacle a disposable cup 9 positioned at the front.

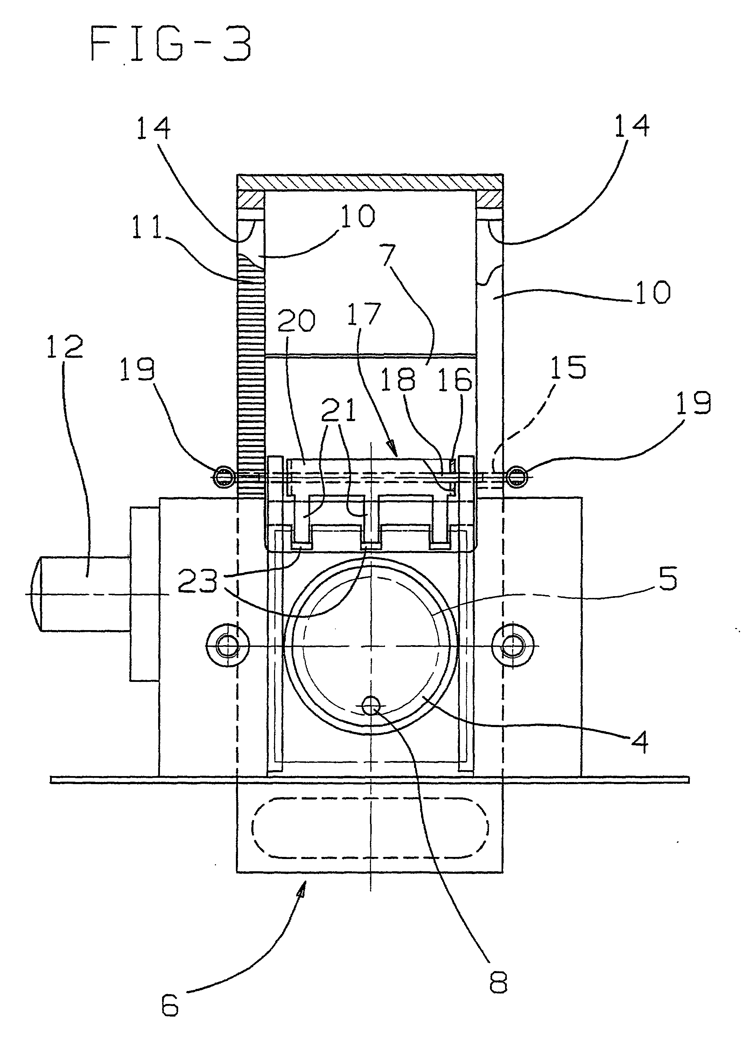

The drawer 6 is equipped at the rear with parallel lateral appendages or guides 10 (see also Figure 3), on the top of one of which is machined a longitudinal segment of rack 11, engaged by appropriate means of an electric motor 12.

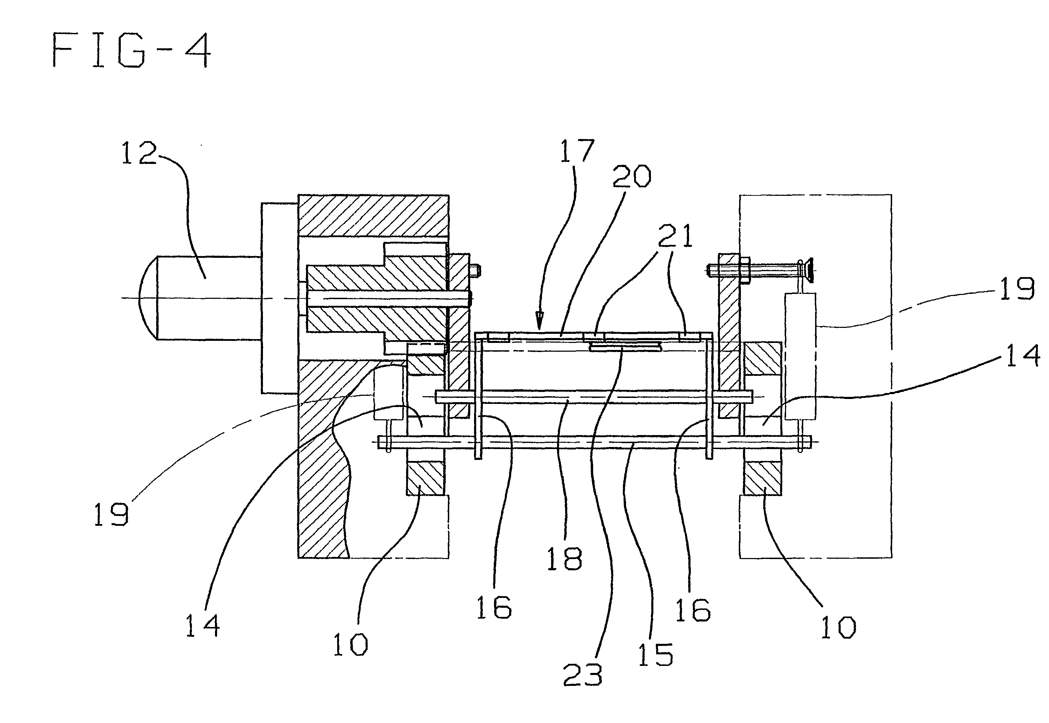

The parallel lateral guides 10 exhibit respective longitudinal symmetrical slots 13, distally shaped with a lower projection 14, through the aperture of which slots a pin 15 is introduced, at a level appropriate to engage with said projection 14, and connecting at the bottom the parallel levers 16 interposed therein which actuate an assembly that may be described as a "pincer" for associated functions that are more fully explained below, indicated as a whole by 17 (see also Figure 4);
the levers 16 have a fulcrum 18 which is fixed relative to the vertical travel of the upper pod support shell 3 and to the horizontal travel of the lower pod support shell 4 and are designed with two angles of elasticity relative to said fulcrum 18 by means of lateral springs 19;
the levers 16 are, furthermore, paired at the top by a crossbar 20, equipped with three proximal prongs 21, and able to engage with a lower projection 22 of the sliding assembly 2 in a raised position and to fall back onto a fixed bracket 23 in the same plane as the lower pod support shell 4 for the functions which will now be specified below.

### Dynamic description of the illustrative embodiment

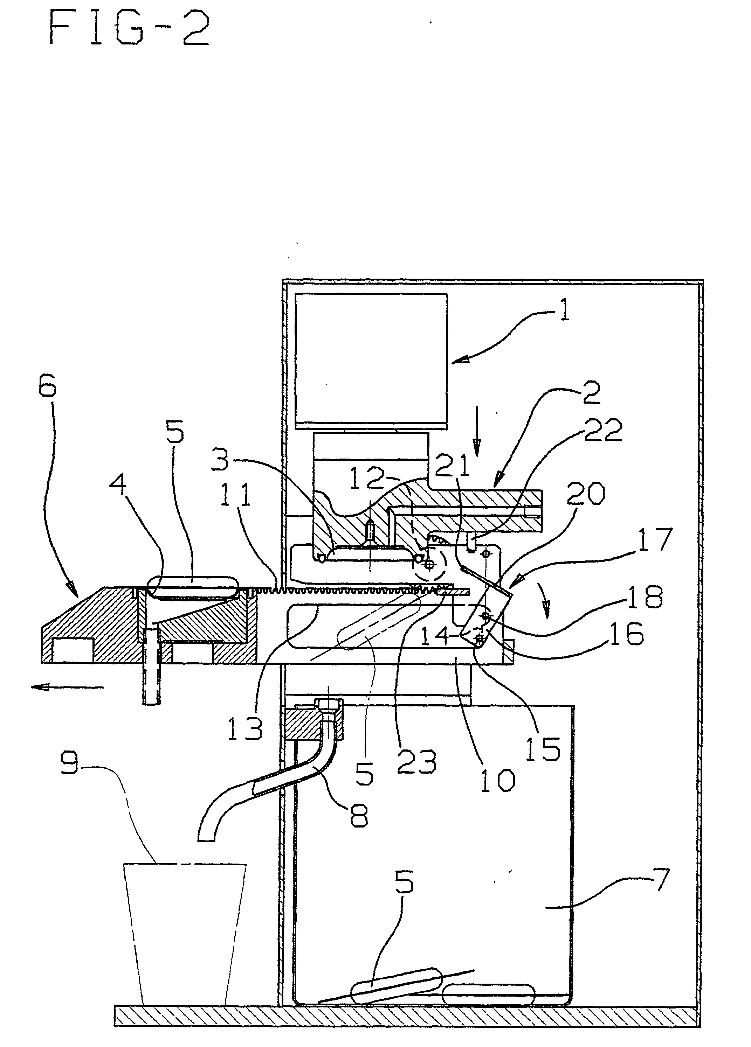

The static description of a preferred example of embodiment of the device according to the present invention having thus been completed, the dynamic or functional description will now be given below:
by means of a command given in any known manner by the user, the drawer 6 moves out forward as a result of the action of the motor 12 on the rack 11 to the end of the retraction travel (see Figure 2);
in this position, a pod 5, to be taken for this purpose from any dispenser thereof of a known type, is placed by the user on the lower pod support shell 4, whereupon the drawer 6 may be caused to move under a stimulus to be provided by said user.

At this point the espresso coffee beverage production cycle as such may take place: this requires the downward movement, actuated automatically or manually in a known manner, of the sliding assembly 2 and subsequently the pressurization stroke of the upper pod support shell 3 onto the lower pod support shell 4, trapping the pod 5 between them, by means of which, again in a known manner, a flow of heated water is brought to sufficient pressure to permeate the pod and, becoming charged with coffee essence, falls into the consumption container 9 via the piping 8.

In its downward movement, the sliding assembly 2 engages with the crossbar 20 of the pincer 17, moving the levers 16 across the fulcrum 18 to the other angle of elasticity, thus trapping, by means of the prongs 21 against the stop provided by the bracket 23, the double-layered margin of filter paper, however it may be shaped, which surrounds the discoid form of the pod 5, the margin having arrived at this point as a result of the insertion of the drawer 6 (see Figure 1).

On completion of the beverage production phase, the sliding assembly 2 is raised and the pod 5 remains positioned on the lower pod support shell 4, remaining engaged by the pincer 17 until the next movement to open the drawer 6 for a new production cycle:
when the drawer 6 is again displaced, in the manner already referred to at the outset of the dynamic description, the spent pod 5 remains trapped by the pincer 17 and, when the support supplied by the lower pod support shell 4 is completely removed from it, it is forced to hang down into the space created there (see Figure 2).

On completion of the retraction travel of the drawer 6, the slots 13 of the parallel lateral guides 10 behind the drawer reach the end of their own aperture, striking with the tooth 14 against the lower linking pin 15 of the levers 16, moving them across the fulcrum 18 to the other angle of elasticity, thus opening the pincer 17, whose fulcrum 18 finds space in the wider portion of the slots 13 above the tooth 14, i.e. releasing from the prongs 21, on the stop provided by the bracket 22, the margin of filter paper of the spent pod 5, which thus falls into the collecting box 7 for spent pods 5, leaving the track frce for the drawer 6 to return for a new production cycle.

### Alternative embodiments

It is clear that, in further alternative embodiments, provided that they fall within the concept of a solution on which the illustrative embodiment described above and claimed below is based, the device according to the present invention can be embodied by equivalent technical and mechanical means, or supplied with further supplementary arrangements, and that all the designs of the various components can be varied suitably for the purpose, samples of which will be given below, purely by way of example and without implying any limitation:
the automatic drawer travel means may alternatively be designed and/or positioned in any desired different manner appropriate to the purpose;
the drawer may also easily be adapted for manual operation by means of simple application of gripping means to the front thereof and, preferably, of arrangements such as to require the user to carry out the entire retraction travel;
the rear lateral guides may alternatively be replaced by any desired device of a shape such as to engage the pincer opening means at the end of the retraction travel of the drawer;
the closure of the pincer, instead of being provided by the downward movement of the upper sliding assembly, as described and illustrated in the preferred example of an embodiment, may also be alternatively actuated by said rear lateral guides, appropriately designed for the purpose and with a slot which is shaped proximally in a manner that is a mirror image of the similar distil shaping seen above;
decisively and fundamentally regarding the solution concept and the scope of the claims: both the closure and the opening of the pincer may alternatively be actuated by the agency of any desired means of any nature, appropriately timed, provided that it is suitable for the purpose.

## Claims

1. A device for feeding precompressed single-serving pods in machines for the production of espresso coffee beverages, comprising a retractable drawer (6) incorporating a lower pod support (4), **characterized in that** it further comprises pod (5) retaining means (17) which are dissociated for travel purposes from said drawer (6) and activated and deactivated in phase with the retraction thereof.

2. The device as claimed in the preceding claim, wherein said retaining means (17) are actuated to retain said pod (5) for a phase which begins at any stage subsequent to the completion of the closure of said drawer (6) and in any case extends almost until the end of the opening of said drawer (6).

3. The device as claimed in claim 1, comprising a drawer (6) incorporating a lower pod support (4) equipped with means (10) adapted to deactivate, in the retraction phase, pod (5) retaining means (17) actuated by the pressurization stroke of the upper pod support (3).

4. The device as claimed in claim 1, comprising a drawer (6) incorporating a lower pod support shell (4) equipped with a rear appendage (10) adapted to engage, in the retraction phase, the opening means (15-16) of a pincer (17) having two angles of elasticity for the retention of a pod (5) clamped by the pressurization stroke of the upper pod support shell (3).

5. The device as claimed in claim 1, comprising:
- a sliding assembly (2) incorporating an upper pod support shell (3) moved during the pressurization stroke onto a lower pod support shell (4);
a drawer (6) equipped with at least one guide (10) provided with a distally shaped longitudinal slot (13) having a lower projection (14);
- actuating means (15) introducing themselves into said slot (13) of at least one lever (16) having two angles of elasticity and equipped with means (20-21) adapted to interfere with said sliding assembly (2) in a raised position and to fall back onto fixed stop means (23) in the same plane as said lower pod support shell (4).

6. The device as claimed in claim 1, comprising:
- a sliding assembly (2) incorporating an upper pod support shell (3) moved during the pressurization stroke onto a lower pod support shell (4);
- a drawer (6) equipped at the rear with two parallel guides (10) provided with respective longitudinal slots (13) distally shaped with respective lower projections (14);
- lower coupling means (15) introducing themselves into said slots (13) of two parallel levers (16) having two angles of elasticity and paired at the top by a crossbar (20) adapted to interfere with said sliding assembly (2) in a raised position and to fall back on fixed stop means (23) in the same plane as said lower pod support shell (4).

7. The device as claimed in claims 1 and 6, wherein said levers (16) have a fulcrum (18) which is fixed relative to the vertical travel of said upper pod support shell (3) and to the horizontal travel of said lower pod support shell (4).

8. The device as claimed in claims 1 and 6, wherein said levers (16) are designed to have two angles of elasticity relative to said fulcrum (18) by means of lateral springs (19).

9. The device as claimed in claims 1 and 6, wherein said levers (16) are paired at the top by a crossbar (20) provided with prongs (21) and adapted to interfere with said sliding assembly (2) in a raised position and to fall back on a fixed bracket (23) in the same plane as said lower pod support shell (4).

10. The device as claimed in claims 1 and 6, wherein said lower pod support shell (4) recessed in said drawer (6) is positioned above a collecting box (7) for spent pods (5) and is connected to piping (8) for passing the prepared beverage to a consumption receptacle (9).

11. The device as claimed in claims 1 and 6, wherein a longitudinal segment of a rack (11) engaged by an electric motor (12) is machined on the top of one of said guides (10).

12. The device as claimed in the preceding claims, wherein the automatic travel means of said drawer (6) are designed and/or constructed and/or positioned in any manner suitable for the purpose.

13. The device as claimed in the preceding claims, wherein said drawer (6) is designed to be manually operated by gripping means on its front and arrangements adapted to require the user to complete the entire associated retraction travel.

14. The device as claimed in the preceding claims, wherein said rear lateral guides (10) are alternatively constituted by any desired shaped mechanism adapted to engage the means for opening said pincer (17) at the end of the retraction travel of said drawer (6).

15. The device as claimed in the preceding claims, wherein the closure of said pincer (17) is alto actuated by said rear lateral guides (10), provided for the purpose with a slot that is shaped proximally in a manner that is the mirror image of the associated distal shaping.

16. The device as claimed in the preceding claims, wherein the closing of said pincer (17) is actuated by the agency of any means of any kind suitable for the purpose.

17. The device as claimed in the preceding claims, wherein the opening of said pincer (17) is actuated by the agency of any means of any kind suitable for the purpose.

## Patentansprüche

1. Vorrichtung zum Zuführen vorgepreßter Monodosis - Portionskuchen für die Zubereitung von Espresso - Kaffeegetränken, die eine ausziehbare Schublade (6) mit einer unteren Kuchenaufnahme (4) hat, **dadurch gekennzeichnet, daß** sie ferner Mittel (17) zum Festhalten eines Portionskuchens (5) aufweist, die zur Ermöglichung der Verschiebebewegungen von der Schublade (6) getrennt sind und die in Phase mit dem Herausziehen der Schublade aktiviert und deaktiviert werden.

2. Vorrichtung nach Anspruch 1, **dadurch gekennzeichnet, daß** die Festhalte-Mittel (17) für eine Phase zum Halten eines Portionskuchens (5) aktiviert werden, die in einem beliebigen Zustand nach dem vollständigen Schließen der Schublade (6) beginnt und sich in jedem Fall bis ungefähr zum Ende der Öffnungsbewegung der Schublade (6) erstreckt.

3. Vorrichtung nach Anspruch 1 mit einer die untere Kuchenaufnahme (4) aufweisenden Schublade (6), die mit Mitteln (10) ausgerüstet ist, welche in der Auszugsphase der Schublade die Mittel (17) zum Festhalten eines Portionskuchens (5) deaktivieren, welche durch den Druckhub der oberen Kuchenaufnahme (3) aktiviert wurden.

4. Vorrichtung nach Anspruch 1 mit einer die untere Kuchenaufnahmeschale (4) aufweisenden Schublade (6), die einen hinteren Ansatz (10) hat, der in der Auszugsphase der Schublade Mittel (15, 16) zum Öffnen einer Zange (17) mit zwei Federkraftwinkeln betätigt, wobei die Zange (17) einen Portionskuchen (5) hält, der durch den Druckhub der oberen Kuchenaufnahmeschale (3) eingespannt wurde.

5. Vorrichtung nach Anspruch 1, umfassend:
- eine Verschiebeeinheit (2) mit einer oberen Kuchenaufnahmeschale (3), die durch den Druckhub gegen die untere Kuchenaufnahmeschale (4) bewegt wird,
- eine Schublade (6) mit wenigstens einer Führung (10), die einen Längsschlitz (13) mit einem unteren Vorsprung (14) aufweist,
- Schaltmittel (15), die in den Schlitz (13) mit wenigstens einem Hebel (16) eingreifen, der zwei Federkraftwinkel hat und mit Mitteln (20, 21) versehen ist, die mit der Verschiebeeinheit (2) in einer angehobenen Stellung in Wirkverbindung treten und die gegen feste Anschlagmittel (23) nach unten zurückfallen, welche in derselben Ebene wie die untere Kuchenaufnahmeschale (4) liegen.

6. Vorrichtung nach Anspruch 1, umfassend:
- eine Verschiebeeinheit (2) mit einer oberen Kuchenaufnahmeschale (3), die durch den Druckhub gegen die untere Kuchenaufnahmeschale (4) bewegt wird,
- eine Schublade (6), die hinten zwei parallele Führungen (10) mit jeweiligem Längsschlitz (13) aufweist, der distal einen unteren Vorsprung (14) hat,
- untere Kupplungsmittel (15), die in die Schlitze (13) mit den beiden parallelen Hebeln (16) eingreifen, die zwei Federkraftwinkel haben und oben durch eine Traverse (20) miteinander verbunden sind, die mit der Verschiebeeinheit (2) in einer angehobenen Stellung in Wirkverbindung tritt und gegen feste Anschlagmittel (23) nach unten zurückfällt, welche in derselben Ebene wie die untere Kuchenaufnahmeschale (4) liegen.

7. Vorrichtung nach Anspruch 1 und 6, **dadurch gekennzeichnet, daß** die Hebel (16) eine Schwenkachse (18) haben, die bezüglich der Vertikalverschiebung der oberen Kuchenaufnahmeschale (3) und der Horizontalverschiebung der unteren Kuchenaufnahmeschale (4) feststeht.

8. Vorrichtung nach Anspruch 1 und 6, **dadurch gekennzeichnet, daß** die Hebel (16) bezüglich ihrer Schwenkachse (18) zwei durch seitliche Federn (19) bestimmte Federkraftwinkel haben.

9. Vorrichtung nach Anspruch 1 und 6, **dadurch gekennzeichnet, daß** die Hebel (16) oben durch eine Traverse (20) miteinander verbunden sind, die Finger (21) aufweist, die mit der Verschiebeeinheit (2) in einer angehobenen Stellung in Wirkverbindung treten und die gegen eine feste Stütze (23) nach unten zurückfallen, welche in derselben Ebene wie die untere Kuchenaufnahmeschale (4) liegt.

10. Vorrichtung nach Anspruch 1 und 6, **dadurch gekennzeichnet, daß** die in die Schublade (6) eingearbeitete, untere Kuchenaufnahmeschale (4) über einem Sammelbehälter (7) für verbrauchte Portionskuchen (5) liegt und an eine Leitung (8) zur Abgabe des fertigen Getränks in einen Becher (9) angeschlossen ist.

11. Vorrichtung nach Anspruch 1 und 6, **dadurch gekennzeichnet, daß** an der Oberseite einer der Führungen (10) ein in Längsrichtung verlaufendes Zahnstangenelement (11) ausgebildet ist, das in Eingriff mit einem Elektromotor (12) ist.

12. Vorrichtung nach einem der vorhergehenden Ansprüche, **dadurch gekennzeichnet, daß** die automatischen Verschiebemittel für die Schublade (6) in für die Anwendung geeigneter Weise ausgelegt und/oder konstruiert und/oder positioniert sind.

13. Vorrichtung nach einem der vorhergehenden Ansprüche, **dadurch gekennzeichnet, daß** die Schublade (6) für die manuelle Betätigung ausgelegt ist und hierzu an der Vorderseite Greifmittel aufweist sowie mit Einrichtungen versehen ist, die den Benutzer veranlassen, den gesamten Ausziehweg durchzuführen.

14. Vorrichtung nach einem der vorhergehenden Ansprüche, **dadurch gekennzeichnet, daß** die hinteren, seitlichen Führungen (10) alternativ aus jedem beliebig gestalteten Mechanismus bestehen, der mit den Mitteln zum Öffnen der Zange (17) am Ende der Auszugsbewegung der Schublade (6) in Eingriff kommt.

15. Vorrichtung nach einem der vorhergehenden Ansprüche, **dadurch gekennzeichnet, daß** die Zange (17) auch durch die hinteren seitlichen Führungen (10) geschlossen wird, wozu diese einen Schlitz haben, der proximal spiegelsymmetrisch zum distalen Bereich ausgebildet ist.

16. Vorrichtung nach einem der vorhergehenden Ansprüche, **dadurch gekennzeichnet, daß** die Schließoperation der Zange (17) über jedes beliebige, zu diesem Zweck gestaltete Mittel erfolgt.

17. Vorrichtung nach einem der vorhergehenden Ansprüche, **dadurch gekennzeichnet, daß** die Öffnungsoperation der Zange (17) über jedes beliebige, zu diesem Zweck gestaltete Mittel erfolgt.

## Revendications

1. Dispositif pour l'alimentation des pastilles monodoses précomprimées dans les machines de préparation des cafés expresso,comprenant un tiroir (6) avec un support inférieur (4) des pastilles,**caractérisé par le fait qu'**il comprend en outre des moyens (17) de maintien de pastille (5) dissociés du tiroir (6) afin d'en permettre les mouvements et apte à être activés et désactivés en phase avec l'extraction du tiroir.

2. Dispositif selon la revendication 1,**caractérisé par le fait que** les moyens de maintien (17) sont activés pour une phase de maintien d'une pastille (5)commençant à n'importe quel moment après la fermeture complète du tiroir (6) et durant en tout cas presque jusqu'à la fin de l'extraction du tiroir (6).

3. Dispositif selon la revendication 1 comprenant le tiroir (6) avec le support inférieur (4) de la pastille, ledit tiroir étant muni des moyens (10) pour désactiver les moyens (17) de maintien de la pastille (5) pendant la phase d'extraction du tiroir, lesdits moyens (10) ayant été activés par la course de compression du support supérieur (3) de la pastille.

4. Dispositif selon la revendication 1 comprenant le tiroir (6) avec la calotte du support inférieur (4),ledit tiroir étant muni d'un appendice postérieur (10) apte à actionner, pendant la phase d'extraction du tiroir, des moyens (15, 16) d'ouverture d'une pince (17) ayant deux positions rendues stables par un ressort, ladite pince maintenant la pastille (5) qui a été serrée par la course de compression de la calotte du support supérieur (3).

5. Dispositif selon la revendication 1,**caractérisé par le fait qu'**il comprend :
- une unité de déplacement (2) munie d'une calotte de support supérieur (3) de la pastille, mue par la course de compression contre la calotte de support inférieur (4) de la pastille,
- un tiroir (6) muni d'au moins un guide (10) avec une fente longitudinale (13) présentant une partie inférieure en saillie (14),
- des moyens d'actionnement (15) s'insérant dans la fente (13) avec au moins un levier (16) à deux positions rendues stables par ressort et possédant des moyens (20, 21) coopérant avec l'unité de déplacement (2) dans sa position supérieure et retombant contre une butée fixe (23) positionnée sur le même plan que la calotte de support inférieur (4).

6. Dispositif selon la revendication 1, **caractérisé par le fait qu'**il comprend :
- une unité de déplacement (2) munie d'une calotte de support supérieur (3) de la pastille, mue par la course de compression contre la calotte de support inférieur (4) de la pastille,
- un tiroir (6) muni de deux guides parallèles postérieurs présentant lesdites fentes longitudinales (13), chacune des fentes présentant une saillie inférieure (14) à l'extrémité postérieure,
- un élément inférieur d'accouplement (15) s'insérant dans les fentes (13), ledit élément étant partie intégrante des deux leviers parallèles (16) qui ont deux positions rendues stables par ressort et sont raccordés par une traverse supérieure (20) coopérant avec l'unité de déplacement (2) dans sa position supérieure et retombant contre une butée fixe (23) positionnée sur le même plan que la calotte de support inférieur (4).

7. Dispositif selon les revendications 1 et 6 **caractérisé par le fait que** lesdits leviers (16) ont un axe d'oscillation (18) qui est fixe par rapport au mouvement vertical de la calotte de support supérieur (3) et par rapport au mouvement horizontal de la calotte de support inférieur (4).

8. Dispositif selon les revendications 1 et 6 **caractérisé par le fait que** lesdits leviers (16) présentent deux positions rendues stables par deux ressorts latéraux (19) par rapport à l'axe d'oscillation (18).

9. Dispositif selon les revendications 1 et 6 **caractérisé par le fait que** lesdits leviers (16) sont raccordés par le haut par une traverse (20) munie de doigts (21) aptes à coopérer avec l'unité de déplacement (2) dans sa position supérieure et apte à retomber contre une butée fixe (23) positionnée sur le même plan que la calotte de support inférieur (4).

10. Dispositif selon les revendications 1 et 6 **caractérisé par le fait que** la calotte de support inférieur (4) est intégrée au tiroir (6) et positionnée au-dessus du bac de réception (7) pour les pastilles utilisées (5) et raccordée à une conduite (8) pour la distribution de la boisson dans un gobelet (9).

11. Dispositif selon les revendications 1 et 6 **caractérisé par le fait qu'**au bord supérieur d'un des deux guides (10) est pratiqué un élément longitudinal en forme de crémaillère en prise avec un moteur électrique (12).

12. Dispositif selon une des revendications précédentes **caractérisé par le fait que** les moyens de déplacement automatique du tiroir (6) sont conçus et/ou construits et/ou positionnés d'une manière apte à l'utilisation.

13. Dispositif selon une des revendications précédentes **caractérisé par le fait que** le tiroir (6) est conçu pour être manoeuvré manuellement et présente un élément de prise sur le devant et des moyens incitant l'utilisateur à exécuter l'extraction complète du tiroir.

14. Dispositif selon une des revendications précédentes **caractérisé par le fait que** les guides latéraux postérieurs (10) peuvent en alternative posséder un mécanisme quelconque apte à entraîner les moyens d'ouverture de la pince (17) à la fin du mouvement d'extraction du tiroir (6).

15. Dispositif selon une des revendications précédentes **caractérisé par le fait que** la pince (17) vient se fermer aussi par lesdits guides latéraux postérieurs (10) lesquels présentent pour ce faire une fente dont l'extrémité antérieure est en symétrie spéculaire avec l'extrémité postérieure.

16. Dispositif selon une des revendications précédentes **caractérisé par le fait que** l'opération de fermeture de la pince (17) peut être effectuée d'une toute autre manière apte à remplir ce but.

17. Dispositif selon une des revendications précédentes **caractérisé par le fait que** l'opération d'ouverture de la pince (17) peut être effectuée d'une toute autre manière apte à remplir ce but.
